# EUROPÄISCHE PATENTANMELDUNG

(11) **EP 0 675 337 A2**
(43) Veröffentlichungstag der Anmeldung: **04.10.1995**
(21) Anmeldenummer: 95103111.1
(22) Anmeldetag: 04.03.1995
(51) Int. Cl.: G01B 3/48, G01B 5/20

(54) **Gewinde-Prüfgerät, insbesondere Innengewinde-Prüfgerät**

(30) Priorität: 30.03.1994 DE 4411077
(71) Anmelder: Bodenseewerk Gerätetechnik GmbH, D-88662 Überlingen (DE)
(72) Erfinder: Pfeifer, Oskar, D-63849 Leidersbach (DE); Zeeb, Bernd, D-88662 Überlingen (DE)
(74) Vertreter: Wolgast, Rudolf, Dipl.-Chem. Dr.

(57) **Zusammenfassung**

Ein Gewinde-Prüfgerät, insbesondere Innengewinde-Prüfgerät, enthält ein langgestrecktes Gehäuse (10), eine sich in Längsrichtung des Gehäuses (10) erstreckende Antriebswelle (18), auf welche ein Gewindelehrdorn (26) aufsetzbar ist, einen umsteuerbaren Antriebsmotor (14) zum Antrieb der Antriebswelle (18) und Mittel zur Messung von Gewindedaten. In dem Gehäuse (10) ist ein Schlitten (12) in Längsrichtung des Gehäuses (10) verschiebbar geführt und durch Federn (34,36) in einer Mittelstellung gehalten. Der Antriebsmotor (14) mit der Antriebswelle (18) sitzt in dem Schlitten (12). Der Antriebsmotor (14) ist von einem auf die Relativbewegung zwischen Schlitten (12) und Gehäuse (10) ansprechenden Lagefühler (52) derart steuerbar, daß er bei Auslenkung des Schlittens (12) nach einer Seite aus der Mittelstellung in der einen Drehrichtung und bei Auslenkung des Schlittens (12) nach der entgegengesetzten Seite aus der Mittelstellung in der anderen Drehrichtung läuft.

## Beschreibung

Die Erfindung betrifft ein Gewinde-Prüfgerät, insbesondere Innengewinde-Prüfgerät, mit einem langgestreckten Gehäuse, einer sich in Längsrichtung des Gehäuses erstreckende Antriebswelle, auf welche ein Gewindelehrdorn aufsetzbar ist, einem umsteuerbaren Antriebsmotor zum Antrieb der Antriebswelle und Mittel zur Messung von Gewindedaten.

Ein solches Gewinde-Prüfgerät ist beispielsweise bekannt durch das DE-U-9316 783.0. Bei diesem als Innengewinde-Prüfgerät ausgebildeten Gewinde-Prüfgerät ist eine den Gewindelehrdorn umgebende, durch eine Feder belastete Hülse vorgesehen, die beim Einsatz des Gewinde-Prüfgeräts an einer das Gewinde umgebenden, ebenen Bezugsfläche zur Anlage kommt. Der Hub der Hülse relativ zu dem Gehäuse wird gemessen und mittels einer nullstellbaren Anzeigevorrichtung angezeigt. Dadurch wird unmittelbar die Einschraubtiefe des Gewindes bezogen auf die Bezugsfläche gemessen.

Der Erfindung liegt die Aufgabe zugrunde, die Handhabung eines Gewinde-Prüfgerätes der eingangs genannten Art zu erleichtern.

Erfindungsgemäß wird diese Aufgabe dadurch gelöst, daß in dem Gehäuse ein Schlitten in Längsrichtung des Gehäuses verschiebbar geführt und durch Federn in einer Mittelstellung gehalten ist, der Antriebsmotor mit der Antriebswelle in dem Schlitten sitzt und der Antriebsmotor von einem auf die Relativbewegung zwischen Schlitten und Gehäuse ansprechenden Lagefühler derart steuerbar ist, daß er bei Auslenkung des Schlittens nach einer Seite aus der Mittelstellung in der einen Drehrichtung und bei Auslenkung des Schlittens nach der entgegengesetzten Seite aus der Mittelstellung in der anderen Drehrichtung läuft.

Bei einem Druck in Längsrichtung auf das Gehäuse gegen das Werkstück mit dem zu prüfenden Innengewinde wird der Schlitten mit dem Gewindelehrdorn gegenüber dem Gehäuse verschoben. Der Gewindelehrdorn wird dann von dem Antriebsmotor über die Antriebswelle so angetrieben, daß er sich in das Innengewinde einschraubt. Wenn auf das Gehäuse ein Zug von dem Werkstück weg ausgeübt wird, bewegt sich das Gehäuse relativ zu dem Schlitten so, daß der Antriebsmotor umgesteuert wird. Der Gewindelehrdorn wird aus dem Innengewinde wieder herausgeschraubt.

Der Antriebmotor kann durch einen in das Gehäuse eingebauten Akkumulator gespeist werden. Es ergibt sich dann ein handliches, überall einsetzbares Gewinde-Prüfgerät.

Der Schlitten kann zwischen zwei Anschlagkörpern gehalten sein. Die Anschlagkörper sind jeweils in Richtung von dem Schlitten weg in dem Gehäuse beweglich geführt und liegen in Richtung auf den Schlitten zu an je einem Gehäuseanschlag an. Die Anschlagkörper sind durch je eine vorgespannte Feder gegen den Anschlag vorbelastet. Auf diese Weise ist der Schlitten in der Ruhestellung, ohne axiale Kräfte, in einer genau definierten Lage relativ zu dem Gehäuse. Zum Bewegen des Schlittens aus der Mittellage heraus, muß jeweils die Vorspannung der einen der Federn überwunden werden. Die andere Feder wird nicht wirksam, da sie den Anschlagkörper gegen den gehäusefesten Anschlag drückt. Es tritt also schon bei kleinen Auslenkungen eine deutliche Rückstellkraft auf.

Die Drehzahl des Antriebsmotors ist vorteilhafterweise durch den Abgriff in Abhängigkeit von der Auslenkung des Schlittens relativ zu dem Gehäuse stetig veränderlich.

Zur Bestimmung der Gewindetiefe kann mit dem Antriebsmotor ein Impulsgeber gekoppelt sei. Die Impulse des Impulsgebers sind auf einen Zähler aufgeschaltet. Der Zähler wird bei Umsteuerung des Antriebsmotors vom Einschraubdrehsinn auf Ausschraubdrehsinn auf null zurückgesetzt und bei Lösen des Gewindelehrdorns von dem Prüfgewinde ausgelesen. Dabei kann das Auslesen des Zählers durch den Lagefühler bei Rückkehr des Schlittens in seine Mittellage auslösbar sein. Es kann aber auch das Auslesen des Zählers durch einen Abfall des Motorstroms des Antriebsmotors auslösbar sein, wenn der Gewindelehrdorn das Innengewinde verläßt und demgemäß das Drehmoment abfällt.

An dem Gehäuse kann ein axial einstellbarer Kragen angebracht sein, der die Antriebswelle und den Gewindelehrdorn koaxial umgibt. Der Kragen definiert dann eine Einschraubtiefe, um welche der Gewindelehrdorn in der Ruhestellung über den Rand des Kragens hinausragt. Beim Einschrauben wird der Gewindelehrdorn an das zu prüfende Innengewinde angesetzt und gegen das Werkstück gedrückt. Der Gewindelehrdorn wird dann in das Innengewinde eingeschraubt. Dabei setzt sich der Kragen auf die Oberfläche des Werkstücks um das Innengewinde herum auf. Der Schlitten ist dabei weiterhin gegen das Gehäuse verschoben. Der Gewindelehrdorn wird daher weiter in das Innengewinde eingeschraubt, bis der Schlitten relativ zu dem Gehäuse seine Mittelstellung erreicht hat. Dann läuft der Antriebsmotor immer langsamer und bleibt schließlich stehen. In diesem Zustand ist der Gewindelehrdorn genau um die Strecke in das Gewinde eingeschraubt worden, um welche der Gewindelehrdorn in der Mittelstellung des Schlittens über den Rand des Kragens vorsteht.

Zur Messung des aufgebrachten Drehmoments kann der Motorstrom des Antriebsmotors durch einen Meßwiderstand geleitet sein, wobei die an dem Meßwiderstand abfallende Spannung ein Maß für das von dem Antriebsmotor aufgebrachte Drehmoment liefert.

Die an dem Meßwiderstand abgegriffene Spannung kann mit einer Referenzspannung auf einen Motorregler geschaltet sein. Das von dem Antriebsmotor abgegebene maximale Drehmoment wird dann durch den Motorregler auf einen durch die Referenzspannung vorgegebenen Wert begrenzt.

Auf der Mantelfläche des Gehäuses kann ein Feld für Bedien- und Anzeigeelement vorgesehen sein.

Ein Ausführungsbeispiel der Erfindung ist nachstehend unter Bezugnahme auf die zugehörigen Zeichnungen näher erläutert.
- Fig.1: ist eine schematische Darstellung eines Innengewinde-Prüfgerätes.
- Fig.2: zeigt im Längsschnitt eine konstruktive Ausführung des Innengewinde-Prüfgerätes.
- Fig.3: zeigt eine Ansicht des Innengewinde-Prüfgeräts von oben in Fig.2, wobei jedoch in Fig.3 die Stromversorgung hier über ein Netzteil erfolgt.
- Fig.4: ist ein Blockdiagramm der Steuerung und der Signalverarbeitung.

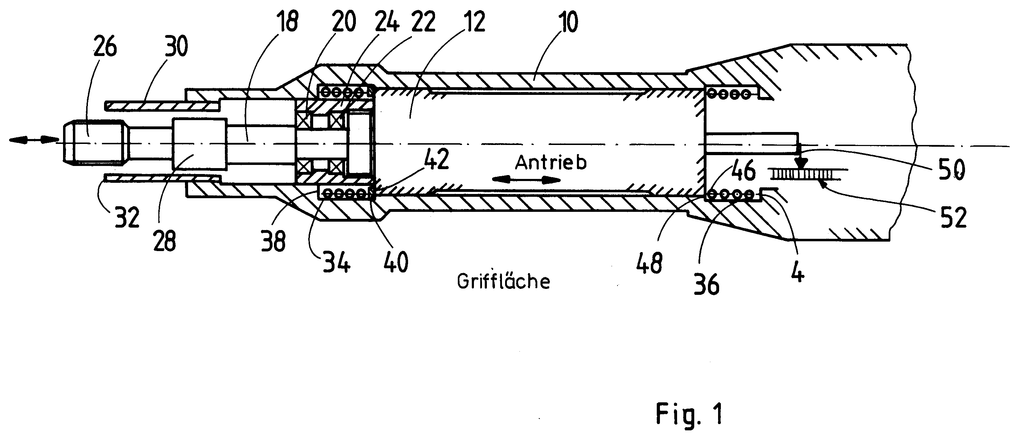

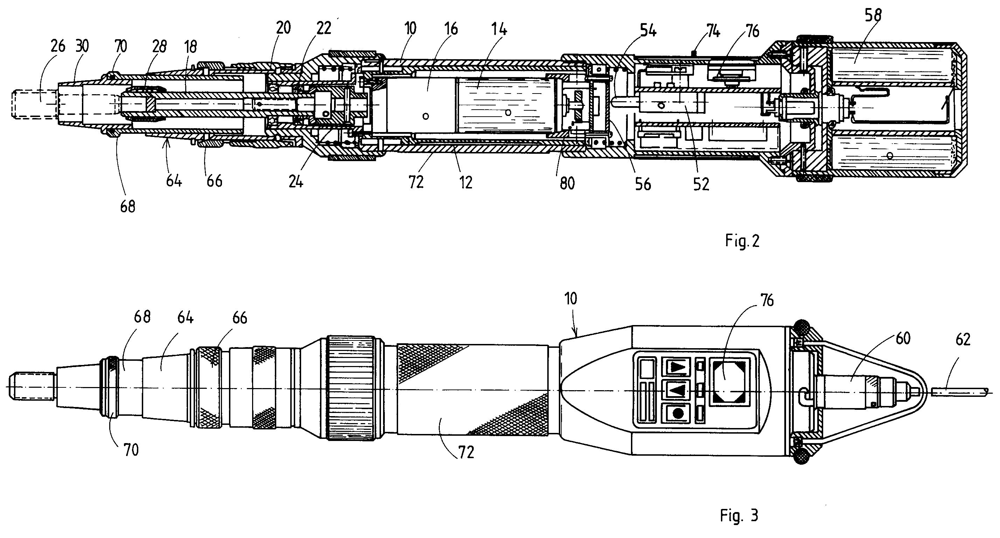

In Fig.1 ist mit 10 ein langgestrecktes, rohrförmiges Gehäuse bezeichnet. In dem Gehäuse 10 ist ein Schlitten 12 längsbeweglich geführt. Der Schlitten 12 enthält einen Antriebsmotor 14 und ein Getriebe 16 (Fig.2) sowie eine Antriebswelle 18. Die Antriebswelle 18 ist in Lagern 20 und 22 in einer Hülse 24 des Schlittens 12 gelagert. An der Antriebswelle 18 kann ein Gewindelehrdorn 26 mittels eines Spannfutters 28 befestigt werden. An der Stirnseite des Gehäuses 10 ist koaxial zu der Antriebswelle 18 und dem Gewindelehrdorn 26 ein einstellbarer Kragen 30 angebracht, Der Kragen umschließt den Gewindelehrdorn 26 nur auf einem Teil seiner Länge. Der Gewindelehrdorn 26 ragt auf einer Länge "H" über den vorderen Rand 32 des Kragens 30 hinaus.

Der Schlitten 12 ist durch zwei Federn 34 und 36 zentriert. Die Feder 34 stützt sich links in Fig.1 und 2 an einer Schulter 38 des Gehäuses 10 ab und liegt an einem Anschlagglied 40 an. Das Anschlagglied 40 liegt unter dem Einfluß der Feder 34 an einer Schulter 42 des Gehäuses an. Das Anschlagglied 40 ist gegen die Wirkung der Feder 34 nach links in Fig.1, also "von dem Schlitten 12 weg" beweglich. Das Anschlagglied 40 bildet einen federnden Anschlag für den Schlitten 12. Die Feder 34 weist eine Vorspannung auf. In entsprechender Weise stützt sich die Feder 36 rechts in Fig.1 und 2 an einer Schulter 44 des Gehäuses 10 ab und liegt an einem Anschlagglied 46 an. Das Anschlagglied 46 liegt unter dem Einfluß der Feder 36 an einer Schulter 48 des Gehäuses 10 an. Das Anschlagglied 46 ist gegen die Wirkung der Feder 34 nach rechts in Fig.1, also ebenfalls "von dem Schlitten 12 weg" beweglich. Das Anschlagglied 46 bildet auf der rechten Seite einen federnden Anschlag für den Schlitten 12. Die Feder 36 weist ebenfalls eine Vorspannung auf. Auf diese Weise wird der Schlitten 12 in seiner Ruhestellung in einer definierten Lage zwischen den Anschlaggliedern 40 und 46 gehalten. Die Lage der Anschlagglieder 40 und 46 in der Ruhestellung ist durch die Schultern 42 und 48 genau festgelegt. Bei einer Bewegung des Schlittens 12 nach rechts relativ zu dem Gehäuse 10 wird das Anschlagglied 46 gegen die Wirkung der Vorspannung der Feder 36 verschoben. Das Anschlagglied 40 folgt dabei nicht nach sondern wird von der Schulter 42 zurückgehalten. Die Vorspannungen der Federn 34 und 36 heben sich daher nicht auf. Vielmehr muß bei jeder Verschiebung des Schlittens 12 aus der Ruhelage die volle Vorspannung überwunden werden. Der Schlitten 12 ist daher sehr stabil in der Ruhelage gehalten.

Durch den Schlitten 12 ist der Schleifer 50 eines gehäusefesten Potentiometers verstellbar. Das Potentiometer bildet einen Lagefühler 52. Wie in Fig.1 angedeutet, liefert der Lagefühler 52 Ausgangsspannungen unterschiedlicher Polarität, je nachdem, ob der Schlitten 12 gegenüber dem Gehäuse 10 nach rechts oder nach links in Fig.1 aus der Ruhelage ausgelenkt wird.

Wie aus Fig.2 ersichtlich ist, weist der Lagefühler 52 einen Stößel 54 auf, der federnd-kraftschlüssig an der Stirnfläche 56 des Schlittens 12 anliegt.

Die Stromversorgung des Innengewinde-Prüfgerätes erfolgt bei der Ausführung von Fig.2 über einen Akkumulator 58. Stattdessen kann für die Stromversorgung auch ein Netzteil 60 mit einem Anschlußkabel 62 vorgesehen sein, wie in Fig.3 dargestellt ist. Im Übrigen Entspricht Fig.3 einer Seitenansicht des Innengewinde-Prüfgerätes, die auch für die Ausführung von Fig.2 zutreffend ist.

Der Kragen 30 (Fig.1) bildet einen Teil eines verstellbaren Tiefenanschlags 64, der mittels einer Schnellkupplung 66 mit dem Gehäuse 10 verbunden werden kann. Der Kragen 30 des Tiefenanschlags 64 kann durch Verdrehen einer Anlaufhülse 68 axial verstellt werden. Die Anlaufhülse 68 ist mittels einer Rändelung 70 verdrehbar.

Mit 72 ist eine zylindrische Griffläche bezeichnet.

Das Gehäuse 10 weist auf seiner abgeflachten Mantelfläche ein Feld 74 von Bedien- und Anzeigeelementen 76 auf.

Zwischen der Antriebswelle 18 und der Hülse 24 des Schlittens 12 sitzt ein beidseitig wirkender Freilauf 78. Dieser Freilauf 78 behindert den Umlauf der Antriebswelle 18 nicht, solange die Antriebswelle 18 angetrieben ist. Wenn aber die Antriebswelle 18 stillsteht, dann kann ein Drehmoment vom Gehäuse 10 über den undrehbar im Gehäuse geführten Schlitten 12 auf die Antriebswelle 18 ausgeübt werden. Wenn der Gewindelehrdorn 26 in dem zu prüfenden Innengewinde klemmt, dann kann er über das Gehäuse und den Freilauf 78 von Hand herausgedreht werden.

Auf der Welle des Antriebsmotors 14 sitzt ein Impulsgenerator 80. Der Impulsgenerator liefert eine Folge von Impulsen, von denen jeder ein Winkelinkrement des Drehwinkels repräsentiert.

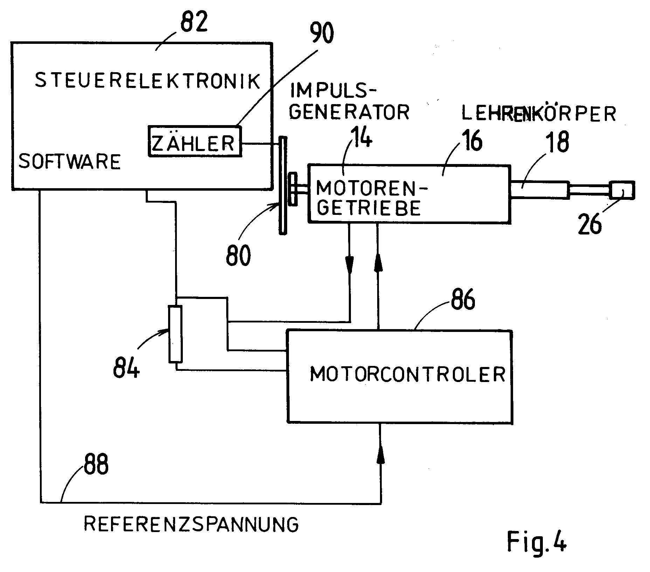

Fig.4 ist ein Blockdiagramm der Steuerung und Signalauswertung. dargestellt.

Mit 82 ist die Steuerelektronik (einschließlich Software) des Innengewinde-Prüfgeräts bezeichnet. Die Steuerelektronik 82 erhält die an einem Meßwiderstand 84 abfallende Spannung. Durch den Meßwiderstand fließt der Motorstrom des Antriebsmotors 14. Dadurch ist die Spannung am Meßwiderstand 84 ein Maß für das von dem Antriebsmotor aufzubringende Drehmoment. Ein Motorregler 86 erhält einerseits die an dem Meßwiderstand 84 abfallende Spannung und andererseits eine Referenzspannung von der Steuerelektronik 82. Der Motorregler 86 regelt den Antriebsmotor 14 so, daß das von dem Antriebsmotor 14 aufgebrachte Drehmoment einen durch die Referenzspannung auf Leitung 88 vorgegebenen Wert nicht überschreitet.

Die Wirkungsweise des beschriebenen Innengewinde-Prüfgeräts ist wie folgt:
Das betriebsbereite Innengewinde-Prüfgerät wird zunächst bei stillstehender Antriebswelle 18 in die zu prüfende Gewindebohrung eingefädelt und senkrecht ausgerichtet. Durch leichtes Drücken des Gehäuses 10 in die Einschraubrichtung, d.h. gegen das Werkstück, wird das Gehäuse 10 relativ zu dem über den Gewindelehrdorn 26 am Werkstück anliegenden Schlitten 12 nach links in Fig.1 oder 2 verschoben. Die Feder 36 wird durch das die Schulter 44 gegen den Schlitten 12 und das daran anliegende Anschlagglied 46 zusammengedrückt. Die Feder 34 bewegt sich mit dem Gehäuse 10 nach links in Fig.1 und 2. Das Anschlagglied 40 hebt von dem Schlitten 12 ab. Der Schleifer 50 gelangt auf die linke Hälfte des von einem Potentiometer gebildeten Lagefühlers 52. Dadurch beginnt sich der Gewindelehrdorn 26 zunächst langsam in die ersten Gewindegänge einzuschrauben. Nachdem der Gewindelehrdorn auf diese Weise eingefädelt und eventuelle Fluchtungsfehler und Verkantungen korrigiert wurden, kann das Gehäuse 10 ganz nach links in Fig.1 durchgedrückt werden. Der Gewindelehrdorn 26 wird mit maximaler Drehzahl eingeschraubt. Kurz vor Erreichen der eingestellten Einschraubtiefe stößt der Kragen 30 auf die Oberfläche des Werkstücks. Durch das weitere Einschrauben des Gewindelehrdornes 26 in die Gewindebohrung wird der Schlitten 12 von der maximal ausgelenkten Position relativ zu dem Gehäuse 10 in Richtung auf die zentrale Ruhestellung gezogen. Damit wird die Bewegung des Gewindelehrdornes 26 immer langsamer. Schließlich bleibt der Antriebsmotor 14 und damit der Schlitten 12 bei Erreichen der Mittelstellung stehen. Ein weiterer Druck des Gehäuses 10 gegen das Werkstück wird von der Hülse 30 aufgenommen und führt zu keiner weiteren Einschraubbewegung. Der Gewindelehrdorn 26 ist dann genau um die Strecke "H" in Fig.1 und 2 in das Innengewinde eingeschraubt worden.

Dann wird das Gehäuse 10 zurückgezogen. Jetzt wird die Feder 34 durch die Schulter 38 gegen das sich an dem festgehaltenen Schlitten 12 abstützende Anschlagglied 40 zusammengedrückt. Der Schleifer gelangt auf den linken Teil des den Lagefühler 52 bildenden Potentiometers. Der Antriebsmotor 14 läuft mit umgekehrter Drehrichtung und schraubt den Gewindelehrdorn 26 aus dem Innengewinde heraus.

Sobald der Gewindelehrdorn 26 aus dem letzten Gewindegang herausgedreht worden ist, wird der Schlitten 12 durch die Federn 34 und 36 wieder im Gehäuse 10 zentriert. Der Antriebsmotor 14 wird durch den Lagefühler 52 stillgesetzt.

Das Einschrauben erfolgt mit einem vorgegebenen Drehmoment. Wenn ein Gewinde schadhaft oder verschmutzt ist oder die vorgegebene Gewindetiefe nicht vorhanden ist, erfolgt der Einschraubvorgang praktisch immer mit dem maximalen Drehmoment, bis die Drehzahl des Antriebsmotors 14 auf null absinkt.

Die Steuerelektronik 82 enthält einen Zähler 90. Dieser Zähler erhält und zählt Impulse, die von dem Impulsgenerator 80 erzeugt werden. Jeder dieser Impulse entspricht einem Winkelinkrement der Drehung des Antriebsmotors. Der Zähler 90 wird auf null zurückgesetzt, wenn der Gewindelehrdorn 26 seine Einschraub-Endstellung erreicht hat und dann durch Ziehen am Gehäuse 10 der Antriebsmotor 14 umgesteuert wird. Dann werden während des Herausschraubens die Impulse des Impulsgebers 80 gezählt und damit der gesamte Drehwinkel des Antriebsmotors 14 bestimmt. Wenn der Gewindelehrdorn 26 die Gewindebohrung verläßt, geht einmal der Schlitten 12 unter dem Einfluß der Federn 34 und 36 in seine mittlere Ruhestellung zurück. Damit wird die Motordrehzahl des Antriebsmotors 14 auf null geregelt. Außerdem sinkt das von dem Antriebsmotor 14 aufzubringende Drehmoment sprungartig ab und damit auch der Motorstrom. Dieser Vorgang wird ausgenutzt, um eine Auslesung des Zählers 90 einzuleiten. Der so erhaltene Zählerstand liefert die Einschraubtiefe.

## Patentansprüche

1. Gewinde-Prüfgerät, insbesondere Innengewinde-Prüfgerät, mit einem langgestreckten Gehäuse (10), einer sich in Längsrichtung des Gehäuses (10) erstreckende Antriebswelle (18), auf welche ein Gewindelehrdorn (26) aufsetzbar ist, einem umsteuerbaren Antriebsmotor (14) zum Antrieb der Antriebswelle (18) und Mittel zur Messung von Gewindedaten,
**dadurch gekennzeichnet, daß**
(a) in dem Gehäuse (10) ein Schlitten (12) in Längsrichtung des Gehäuses (10) verschiebbar geführt und durch Federn (34,36) in einer Mittelstellung gehalten ist,
(b) der Antriebsmotor (14) mit der Antriebswelle (18) in dem Schlitten (12) sitzt und
(c) der Antriebsmotor (14) von einem auf die Relativbewegung zwischen Schlitten (12) und Gehäuse (10) ansprechenden Lagefühler (52) derart steuerbar ist, daß er bei Auslenkung des Schlittens (12) nach einer Seite aus der Mittelstellung in der einen Drehrichtung und bei Auslenkung des Schlittens (12) nach der entgegengesetzten Seite aus der Mittelstellung in der anderen Drehrichtung läuft.

2. Gewinde-Prüfgerät nach Anspruch 1, **dadurch gekennzeichnet, daß** der Antriebmotor (14) durch einen in das Gehäuse (10) eingebauten Akkumulator (58) gespeist wird.

3. Gewinde-Prüfgerät nach Anspruch 1 oder 2, **dadurch gekennzeichnet, daß**
(a) der Schlitten (12) zwischen zwei Anschlagkörpern (40,46) gehalten ist,
(b) die Anschlagkörper (40,46) jeweils in Richtung von dem Schlitten (12) weg in dem Gehäuse (10) beweglich geführt sind und in Richtung auf den Schlitten (12) zu an je einem Gehäuseanschlag (42,48) anliegen und
(c) die Anschlagkörper (40,46) durch je eine vorgespannte Feder (34,36) gegen den Gehäuseanschlag (42,48) vorbelastet sind.

4. Gewinde-Prüfgerät nach einem der Ansprüche 1 bis 3, **dadurch gekennzeichnet, daß** die Drehzahl des Antriebsmotors (14) durch den Lagefühler (52) in Abhängigkeit von der Auslenkung des Schlittens (12) relativ zu dem Gehäuse (10) stetig veränderlich ist.

5. Innengewindemeßgerät nach einem der Ansprüche 1 bis 4, **dadurch gekennzeichnet, daß**
(a) mit dem Antriebsmotor (14) ein Impulsgeber (80) gekoppelt ist,
(b) die Impulse des Impulsgebers (80) auf einen Zähler (90) aufgeschaltet sind, und
(c) der Zähler (90) bei Umsteuerung des Antriebsmotors (14) vom Einschraubdrehsinn auf Ausschraubdrehsinn auf null zurückgesetzt und bei Lösen des Gewindelehrdorns (26) von dem Prüfgewinde ausgelesen wird.

6. Gewinde-Prüfgerät nach Anspruch 5, **dadurch gekennzeichnet, daß** das Auslesen des Zählers (90) durch den Lagefühler (52) bei Rückkehr des Schlittens (12) in seine Mittellage auslösbar ist.

7. Innengewindemeßgerät nach Anspruch 5 oder 6, **dadurch gekennzeichnet, daß** das Auslesen des Zählers (90) durch einen Abfall des Motorstroms des Antriebsmotors (14) auslösbar ist.

8. Innengewindemeßgerät nach einem der Ansprüche 1 bis 7, **dadurch gekennzeichnet, daß** an dem Gehäuse (10) ein axial einstellbarer Kragen (30) angebracht ist, der die Antriebswelle (18) und den Gewindelehrdorn (26) koaxial umgibt.

9. Innengewindemeßgerät nach einem der Ansprüche 1 bis 8, **dadurch gekennzeichnet, daß** zur Messung des aufgebrachten Drehmoments der Motorstrom des Antriebsmotors (14) durch einen Meßwiderstand (84) geleitet ist, wobei die an dem Meßwiderstand (84) abfallende Spannung ein Maß für das von dem Antriebsmotor (14) aufgebrachte Drehmoment liefert.

10. Innengewindemeßgerät nach Anspruch 9, **dadurch gekennzeichnet, daß**
(a) die an dem Meßwiderstand (84) abgegriffene Spannung mit einer Referenzspannung auf einen Motorregler (86) geschaltet ist und
(b) das von dem Antriebsmotor (14) abgegebene maximale Drehmoment durch den Motorregler (86) auf einen durch die Referenzspannung vorgegebenen Wert begrenzt ist.

11. Gewinde-Prüfgerät nach einem der Ansprüche 1 bis 10, dadurch gekennzeichnet, daß auf der Mantelfläche des Gehäuses (10) ein Feld (74) für Bedien- und Anzeigeelemente (76) vorgesehen ist.
